# EUROPEAN PATENT SPECIFICATION

(11) **EP 2 650 327 B1**
(45) Date of publication and mention of the grant of the patent: **17.09.2014**
(21) Application number: 13161899.3
(22) Date of filing: 02.04.2013
(51) Int. Cl.: C08K 3/10, C08K 3/16, C08K 3/34, C08L 21/00, C08L 9/00, C08L 9/06, C08L 23/16

(54) **Activated resol cure rubber composition**
Aktivierte Resol-härtende Gummizusammensetzung
Composition de caoutchouc durci au résol activé

(30) Priority: 12.04.2012 EP 12163844; 26.07.2012 EP 12178007
(43) Date of publication of application: 16.10.2013
(73) Proprietor: Lanxess Elastomers B.V., 6167 AC Geleen (NL)
(72) Inventor: Hough, Philip, 6127 AG Grevenbicht (NL); Duin, Van Martin, 6134 AC SITTARD (NL)
(74) Representative: Herbold, Matthias

(56) References cited:
- US-A- 3 036 980
- US-A- 3 277 209
- US-A- 3 597 377

## Description

The invention is related to a process for preparing a vulcanizable rubber composition comprising at least one elastomeric polymer, at least one phenol formaldehyde resin cross-linker, an activator package, and at least one activated zeolite, and a vulcanizable rubber composition prepared by said process.

The invention also relates to a process for the manufacture of a vulcanized article comprising the steps of preparing a vulcanizable composition by the process mentioned before, shaping, and vulcanizing the vulcanizable rubber composition. The invention further relates to a vulcanized article.

Vulcanizable rubber compositions comprising an elastomeric polymer containing phenol formaldehyde resin cross-linker and an activator package are broadly applied in the industry as for example known from US 3,287,440.

A disadvantage of the rubber composition described in US 3,287,440 is that the therein described rubber compositions have a low cure rate marked by long vulcanization times at standard vulcanization temperatures of up to 170°C. A further disadvantage is a low state of cure apparent from the elevated permanent elongation of the obtained vulcanized articles.

In EP 2441797 a vulcanizable rubber composition is provided comprising phenol formaldehyde resin cross-linker and an activator package having improved cure rate and/or state of cure over US 3,287,440.

However, there is room for further improvement in view of the cure rate and/or state of cure.

It is therefore an object of the present invention to provide a vulcanizable rubber composition having an improved cure rate and/or state of cure compared with the rubber compositions vulcanized by a phenol formaldehyde resin cross-linker known in the art.

This objective is reached by a vulcanizable rubber composition comprising
at least one elastomeric polymer,
at least one phenol formaldehyde resin cross-linker,
an activator package, and
at least one activated zeolite,
prepared by a process comprising the step of preparing a mixture of the following components:
the at least one elastomeric polymer, the at least one phenol formaldehyde resin cross-linker, the activator package and the at least one activated zeolite,
by mixing the components and kneading, characterized in that the activated zeolite is added before the addition of the phenol formaldehyde resin cross-linker and preferably also before the addition of the activator package.

The inventors of the present invention found that in the case that the vulcanizable rubber composition is prepared by adding the activated zeolite to the elastomeric polymer at a point in time within the mixing cycle that is before the phenol formaldehyde resin cross-linker, and preferably also before the activator package, vulcanizable rubber compositions with improved cure rates and/or states of cure are obtained.

Furthermore, the vulcanizable rubber composition according to the present invention results in improved mechanical properties of the vulcanized article reflected in higher tensile strength and reduced compression set over a wide temperature range.

### Summary of the invention

The invention relates to a process for preparing a vulcanizable rubber composition comprising
at least one elastomeric polymer,
at least one phenol formaldehyde resin cross-linker,
an activator package, and
at least one activated zeolite,
comprising the step of preparing a mixture of the following components:
the at least one elastomeric polymer, the at least one phenol formaldehyde resin cross-linker, the activator package and the at least one activated zeolite,
by mixing the components and kneading,
characterized in that the activated zeolite is added before the addition of the phenol formaldehyde resin cross-linker and preferably also before the addition of the activator package,
and to a vulcanizable rubber composition comprising at least one elastomeric polymer, at least one phenol formaldehyde resin cross-linker, an activator package and at least one activated zeolite, prepared by said process.

The invention further relates to a process for the manufacture of a vulcanized article comprising the steps of preparing a vulcanizable rubber composition by a process according to the present invention, shaping and vulcanizing the vulcanizable rubber composition, and a vulcanized article made by said process.

### Details of the invention

### Elastomeric polymer

The elastomeric polymer according to the present invention preferably contains double bond-containing rubbers designated as R rubbers according to DIN/ISO 1629. These rubbers have a double bond in the main chain and might contain double bonds in the side chain in addition to the unsaturated main chain.

They include, for example: Natural rubber (NR), Polyisoprene rubber (IR), Styrene-butadiene rubber (SBR), Polybutadiene rubber (BR), Nitrile rubber (NBR), Butyl rubber (IIR), Brominated isobutylene-isoprene copolymers with bromine contents of 0.1 to 10 wt. % (BIIR), Chlorinated isobutylene-isoprene copolymers with chlorine contents of 0.1 to 10 wt. % (CIIR), Hydrogenated or partially hydrogenated nitrile rubber (HNBR), Styrene-butadiene-acrylonitrile rubber (SNBR), Styrene-isoprene-butadiene rubber (SIBR)and Polychloroprene (CR) or mixtures thereof.

Elastomeric polymer should also be understood to include rubbers comprising a saturated main chain, which are designated as M rubbers according to ISO 1629 and might contain double bonds in the side chain in addition to the saturated main chain. These include for example ethylene propylene rubber EPDM, chlorinated polyethylene CM and chlorosulfonated rubber CSM.
The elastomeric polymer of the above mentioned type in the rubber composition according to the present invention can naturally be modified by further functional groups. In particular, elastomeric polymers that are functionalized by hydroxyl, carboxyl, anhydride, amino, amido and/or epoxy groups are more preferred. Functional groups can be introduced directly during polymerization by means of copolymerization with suitable co-monomers or after polymerization by means of polymer modification.

In one preferred embodiment of the invention, the elastomeric polymer is Natural rubber (NR), Polybutadiene rubber (BR), Nitrile rubber (NBR), Hydrogenated or partially hydrogenated nitrile rubber (HNBR), Styrene-butadiene rubber (SBR), Styrene-isoprene-butadiene rubber (SIBR), Butyl rubber (IIR), Polychloroprene (CR), ethylene propylene rubber (EPDM), chlorinated polyethylene (CM), chlorosulfonated rubber (CSM), Chlorinated isobutylene-isoprene copolymers with chlorine contents of 0.1 to 10 wt. % (CIIR), Brominated isobutylene-isoprene copolymers with bromine contents of 0.1 to 10 wt. % (BIIR), Polyisoprene rubber (IR) or a mixture thereof.

In a further preferred embodiment of the invention, the elastomeric polymer comprises 1,1-disubstituted or 1,1,2-trisubstituted carbon-carbon double bonds. Such di- and trisubstituted structures react especially satisfactorily with a phenol formaldehyde resin cross-linker according to the invention.

The rubber composition can comprise a blend of more than one of the above defined elastomeric polymers.

The elastomeric polymer may have a Mooney viscosity (ML (1+4),125°C) in the range of, for example, 10 to 150 MU, or preferably 30 to 80 MU (ISO 289-1:2005).

The rubber composition prepared according to the invention may also comprise polymers other than the above described elastomeric polymer. Such polymers other than the elastomeric polymer include, polyethylene, polypropylene, acrylic polymer (e.g. poly(meta)acrylic acid alkyl ester, etc.), polyvinyl chloride, ethylene-vinyl acetate copolymers, polyvinyl acetate, polyamide, polyester, chlorinated polyethylene, urethane polymers, styrene polymers, silicone polymers, and epoxy resins.

These polymers other than the elastomeric polymer may be present alone or in combination of two or more kinds.

The ratio of the polymer other than the elastomeric polymer to the elastomeric polymer can be 1.0 or less, preferably 0.66 or less.

Preferred elastomeric polymers are copolymers of ethylene, one or more C₃ to C₂₃ α-olefins and a polyene monomer. Copolymers of ethylene, propylene and a polyene monomer are most preferred (EPDM). Other α-olefins suitable to form a copolymer include 1-butene, 1-pentene, 1-hexene, 1-octene and styrene, branched chain α -olefins such as 4-methylbutene-1,5-methylpent-1-ene, 6-methylhept-1-ene, or mixtures of said α-olefins.

The polyene monomer may be selected from non-conjugated dienes and trienes. The copolymerization of diene or triene monomers allows introduction of one or more unsaturated bonds.

The non-conjugated diene monomer preferably has from 5 to 14 carbon atoms. Preferably, the diene monomer is characterized by the presence of a vinyl or norbornene group in its structure and can include cyclic and bicyclo compounds. Representative diene monomers include 1,4-hexadiene, 1,4-cyclohexadiene, 1,5-hexadiene, 1,6-heptadiene, 1,7-octadiene, dicyclopentadiene, 5-ethylidene-2-norbornene, 5-vinyl-2-norbornene, 5-methylene-2-norbornene, 1,5-heptadiene, and 1,6-octadiene. The copolymer may comprise a mixture of more than one diene monomer. Preferred non-conjugated diene monomers for preparing a copolymer are 1,4-hexadiene (HD), dicyclopentadiene (DCPD), 5-ethylidene-2-norbornene (ENB) and 5-vinyl-2-norbornene (VNB).

The triene monomer will have at least two non-conjugated double bonds, and up to about 30 carbon atoms. Typical triene monomers useful in the copolymer of the invention are 1-isopropylidene-3,4,7,7-tetrahydroindene, 1-isopropylidenedicyclopentadiene, dihydro-isodicyclopentadiene, 2-(2-methylene-4-methyl-3-pentenyl) [2.2.1] bicyclo-5-heptene, 5,9-dimethyl-1,4,8-decatriene, 6,10-dimethyl-1,5,9-undecatriene, 4-ethylidene-6,7-dimethyl-1,6-octadiene, 7-methyl-1,6-octadiene and 3,4,8-trimethyl-1,4,7-nonatriene.

Ethylene-propylene or higher a-olefin copolymers may consist of from about 15 to 80 wt.% ethylene and from about 85 to 20 wt.% C₃ to C₂₃ α-olefin with the preferred weight ratio being from about 35 to 75 wt.% ethylene and from about 65 to 25 wt.% of a C₃ to C₂₃ α -olefin, with the more preferred ratio being from 45 to 70 wt.% ethylene and 55 to 30 wt.% C₃ to C₂₃ α-olefin, wherein the sum of the amounts of ethylene and C₃ to C₂₃ α -olefin is 100 wt.%. The copolymers may additionally comprise polyene-derived units. The level of polyene-derived units might be 0.01 to 20 wt.%, preferably 0.05 to 15 wt.%, or more preferably 0.1 to 10 wt.%, wherein the amount of the C₃ to C₂₃ α -olefin is reduced by said levels of polyene-derived units, and the sum of ethylene, C₃ to C₂₃ α -olefin and polyene-derived units is 100 wt.%.

Irrespective of the other components of the vulcanizable rubber composition, a low content of polyene derived units may cause surface shrinkage on the obtained vulcanized elastomeric composition. Conversely, a high content of polyene derived units may produce cracks in the vulcanized rubber composition.

Another preferred elastomeric polymer in the present invention is butyl rubber which is the type of synthetic rubber made by copolymerizing an iso-olefin with a minor proportion of a polyene having from 4 to 14 carbon atoms per molecule. The iso-olefins generally have from 4 to 7 carbon atoms, and such iso-olefins as isobutylene or ethyl methyl ethylene are preferred. The polyene usually is an aliphatic conjugated diolefin having from 4 to 6 carbon atoms, and is preferably isoprene or butadiene. Other suitable diolefins that may be mentioned are such compounds as piperylene; 2,3-dimethyl butadiene-1,3; 1,2-dimethyl butadiene-1,3; 1,3-dimethyl butadiene-1,3; 1-methyl butadiene-1,3 and 1,4-dimethyl butadiene-1,3. The butyl rubber contains only relatively small mounts of copolymerized diene, typically about 0.5 to 5 wt.%, and seldom more than 10 wt.%, on the total weight of the elastomer. For the sake of convenience and brevity, the various possible synthetic rubbers within this class will be designated generally by the term butyl rubber.

Further preferred elastomeric polymer in the present invention are especially natural rubber and its synthetic counterpart polyisoprene rubber.

The rubber composition prepared according to the present invention should not be understood as being limited to a single elastomeric polymer selected from the above mentioned or preferably described. The rubber composition can comprise a blend of more than one of the above defined elastomeric polymers. Such blends might represent homogeneous or heterogeneous mixtures of polymers where the phenolic resin cross-linker can act in one or more phases as well as act as a compatibilizing agent between the different polymeric phases. The vulcanizable rubber composition of the present invention preferably is characterized in that the elastomeric polymer is NR, BR, NBR, HNBR, SBR, SIBR, IIR, CR, EPDM, CM, CSM, CIIR, BIIR or IR or a mixture thereof.

The amount of the elastomeric polymer in the vulcanizable rubber composition is 100 parts by weight. If more than one elastomeric polymer is employed, the amount of elastomeric polymer mentioned before relates to the sum of the elastomeric polymers employed.

### Phenol formaldehyde resin cross-linker

The term phenol formaldehyde resin cross-linker, phenolic resin, resin cross-linker or resol have identical meanings within this application and denote a phenol and formaldehyde based condensation product used as curing agent.

Further are the terms cross-linking, curing and vulcanizing used with a singular meaning and are fully interchangeable words in the context of the present application, all expressing the thermosetting or fixation of a polymeric network by generation of covalent bonds between the rubber chains or its pedant groups.

The phenol formaldehyde resin cross-linker can be present in the composition prepared according to the invention as such, or can be formed in the composition by an in-situ process from phenol and phenol derivatives with aldehydes and aldehyde derivatives. Suitable examples, of phenol derivatives include alkylated phenols, cresols, bisphenol A, resorcinol, melamine and formaldehyde, particularly in capped form as paraformaldehyde and as hexamethylene tetramine, as well as higher aldehydes, such as butyraldehyde, benzaldehyde, salicylaldehyde, acrolein, crotonaldehyde, acetaldehyde. glyoxilic acid, glyoxilic esters and glyoxal.

Resols based on alkylated phenol and/or resorcinol and formaldehyde are particularly suitable.

Examples of suitable phenolic resins are octyl-phenol formaldehyde curing resins. Commercial resins of this kind are for example Ribetak R7530E, delivered by Arkema, or SP1045, delivered by SG.

The rubber composition can comprise a blend of more than one of the above defined phenol formaldehyde resin cross-linker.

Good results are obtained if 0.5 - 20 parts by weight of a phenol formaldehyde resin cross-linker are present per 100 parts by weight of elastomeric polymer. Preferably 1 - 15 parts by weight, more preferably 2 - 10 parts by weight of a phenol formaldehyde resin cross-linker per 100 parts by weight of elastomeric polymer are present. If more than one phenol formaldehyde resin cross-linker is employed, the amount of phenol formaldehyde resin cross-linker mentioned before relates to the sum of the phenol formaldehyde resin cross-linkers employed. It is important that a sufficient amount of curing agent is present, so that the vulcanized article has good physical properties and is not sticky. If too much curing agent is present, the vulcanized composition according to the invention lacks elastic properties.

### Activator package

While the inherent cure rate of the phenolic resin as such might be sufficient for some applications, commercial practical vulcanizable rubber compositions will preferably further comprise an activator package comprising one or more accelerators or catalysts to work in conjunction with the phenolic resin. The primary function of an accelerator in a vulcanizable rubber composition is to increase the rate of curing. Such agents may also affect the cross-lining density and corresponding physical properties of the vulcanized rubber composition so that any accelerator additive should tend to improve such properties.

In a preferred embodiment of the invention the activator package comprises at least one metal halide.

The metal halide accelerators of the invention are exemplified by such known stable acidic halides as tin chloride, zinc chloride, aluminum chloride and, in general, halides of the various metals of group 3 or higher of the periodic system of elements. This class includes, inter alia, ferrous chloride, chromium chloride and nickel chloride, as well as cobalt chloride, manganese chloride and copper chloride. The metal chlorides constitute a preferred class of accelerators in the composition of the invention. However, acceleration is obtainable with metal salts of other halides such as aluminum bromide and stannic iodide. Metal fluorides such as aluminum fluoride can accelerate, although aluminum fluoride is not particularly desirable. Of the metal chlorides, the most preferred are those of tin, zinc and aluminum.

The heavy metal halides are effective independently of the state of oxidation of the metal, and they are even effective if the halide is partially hydrolyzed, or is only a partial halide, as in zinc oxychloride.

In the case that metal halides are present in the vulcanizable rubber compositions, good results are obtained if 0.5 to 10 parts by weight of a metal halide are present per 100 parts by weight of elastomeric polymer. Preferably, 0.6 to 5 parts by weight, more preferably 0.7 to 2 parts by weight of a metal halide per 100 parts by weight of elastomeric polymer are present. If more than one metal halide is employed, the amount of metal halide mentioned before relates to the sum of the metal halides employed.

In order to improve the preparation of the rubber composition, it is desirable that the metal halide is further coordinated with complexating agents such as water, alcohols and ethers. Such complexated metal halides have improved solubility and dispersability in the rubber compositions.

In another preferred embodiment of the invention the activator package comprises at least one halogenated organic compound.

Suitable halogenated organic compounds are those compounds from which hydrogen halide is split off in the presence of a metal compound.
Halogenated organic compounds include, for example, polymers or copolymers of vinyl chloride and/or vinylidene chloride other polymerizable compounds, halogen containing plastics, for example polychloroprene; halogenated, for example chlorinated or brominated butyl rubber; halogenated or chlorosulphonated products of high-density or low-density polyethylene or higher polyolefins; colloidal mixtures of polyvinyl chloride with an acrylonitrile-butadiene copolymer; halogenated hydrocarbons containing halogen atoms which may be split off or which may split off hydrogen halide, for example liquid or solid chlorination products of paraffinic hydrocarbons of natural or synthetic origin; halogen containing factice, chlorinated acetic acids; acid halides, for example lauroyl, oleyl, stearyl or benzoyl chlorides or bromides, or compounds such as for example N-bromosuccinimide or N-bromo-phthalimide.

In the case that halogenated organic compounds are present in the vulcanizable rubber compositions, good results are obtained if 1 to 20 parts by weight of halogenated organic compounds are present per 100 parts by weight of elastomeric polymer. Preferably, 2 to 10 parts by weight, more preferably 3 to 7 parts by weight of halogenated organic compounds per 100 parts by weight of elastomeric polymer are present. If more than one halogenated organic compound is employed, the amount of halogenated organic compound mentioned before relates to the sum of the halogenated organic compounds employed.

In another preferred embodiment of the invention the phenol formaldehyde resin is halogenated. Such halogenated resin represents the combined functionality of above phenolic resin and above halogenated organic compound. Preferred are brominated phenolic resins. A Commercial resin of this kind is for example SP1055 (delivered by SG).

In one embodiment of the invention the activator package further comprises at least one heavy metal oxide. In the context of the present invention a heavy metal is considered to be a metal with an atomic weight of at least 46 g/mol. Preferably the heavy metal oxide is zinc oxide, lead oxide or stannous oxide, more preferably zinc oxide.

Such heavy metal oxide is recognized to be especially useful in combination with the above mentioned halogenated organic compound and/or halogenated phenolic resin. A further advantage described in the experiments of the present application is the moderation of the cure rate, e.g. scorch retardant, and the stabilization of the vulcanized compounds against thermal aging.

In a preferred embodiment of the invention, the vulcanizable rubber composition prepared according to the process of the present invention comprises zinc oxide.

An advantage of the heavy metal oxide in the composition according to the present invention is an improved heat aging performance of the vulcanized rubber composition reflected by the retention of tensile properties after heat aging.

In the case that heavy metal oxides are present in the vulcanizable rubber compositions, good results are obtained with from 0.5 - 10.0 parts by weight of heavy metal oxide per 100 parts by weight of elastomeric polymer. Preferably with 0.6 - 5.0 parts by weight, more preferably with 1 - 2 parts by weight of heavy metal oxide per 100 parts by weight of elastomeric polymer. If more than one heavy metal oxide is employed, the amount of heavy metal oxide mentioned before relates to the sum of the heavy metal oxides employed. With a sufficient amount of heavy metal oxide, good scorch time and good thermal stability of the vulcanized compound are achieved. If too much heavy metal oxide is used the cure rate will substantially deteriorate.

### Activated zeolite

In the context of the present application, the terminology "activated zeolite" reflects that the zeolite is characterized in that the pores are substantially free of readily adsorbed molecules. Substantially free means that the zeolite preferably comprises 0 to 1 wt.% of adsorbed molecules, more preferably 0 to 0.5 wt.%, most preferably 0 to 0.1 wt%, based on the amount of zeolite. Typical examples for such readily absorbed molecules are low molecular weight polar compounds or hydrocarbons. However, the zeolite may comprise water molecules in form of moisture as mentioned below. Adsorption of such molecules will result in a deactivated zeolite.

An activated zeolite is obtained by subjection to a temperature and/or low pressure treatment such to substantially decompose and/or remove components from its pores. In a preferred embodiment activated zeolite is obtained by subjection to a temperature preferably of at least 170 °C and low pressure treatment, in particular at a pressure of less than 300 mm Hg, in particular by treating a zeolite at least 8 hours, preferably at least 12 hours, in particular at least 24 hours at a temperature of at least 170°C at a pressure of less than 300 mm Hg, in particular less than 50 mm Hg, preferably less than 15 mm. The zeolite to be activated will be described below. An activated zeolite with a good activity can be obtained by a treatment of a commercially available zeolite, in particular a zeolite 5A in powder form at 180 °C and 10 mm Hg for 48 hours. A treatment may also consist of storing the zeolite for a period of 24 hours at 200°C and at reduced pressure, whereby the preferred pressure is identified by the above given ranges. Such activation process of zeolites is well known to the person skilled in the art for producing a zeolite suited as a drying agent. Preferably the activated zeolite is dried zeolite having a a water content of less than 0.5 wt % of water, preferably comprises 0 to 1 wt.%. In particular the activated zeolite does not contain acid halides above 0.1 wt%. Deactivation of the zeolite may proceed by diffusion of compounds such as for example water, hydrocarbons, acids or bases into the pores of the zeolite and driving out the potentially present inert gasses such as for example oxygen and nitrogen present from the activation process.

Deliberate deactivation of the zeolite is for example known from the temporary or permanent immobilization of catalysts in which case the zeolite assumes the role of a carrier material. Accidental deactivation of the zeolite will take place if the activated zeolite is exposed to the environment from which it will absorb moisture and/or other compounds. It should be recognized that unintended deactivation by moisture is difficult to avoid in a rubber processing environment where the composition of the present invention is mainly used and, in consequence, a significant deactivation of the activated zeolite especially by moisture is considered to fall under the scope of the present invention. Such deactivation of the zeolite comprised in the composition according to the invention by moisture might reach levels of 75%, preferably less than 50%, more preferably less than 25% of the maximum moisture deactivation under ambient conditions. Whereas moisture deactivation might be tolerated to a large extent the loading of the activated zeolite comprised in the composition of the present invention by compounds other than water is less than 5 wt%, preferably less than 3 wt%, more preferably less than 1 wt% compared to the activated zeolite.

Deactivation of the activated zeolite by other compounds than water is believed to negatively impact the contemplated effect of the present invention, being a higher rate of cure and state of cure due to a reduction of absorption capacity of the zeolite combined with the potential contamination of the composition by the degassing of compounds, from which water is obviously least detrimental.

In addition deactivation of the zeolite may proceed by diffusion of compounds such as for example water, hydrocarbons, acids or bases into the pores of the zeolite and driving out the potentially present inert gasses such as for example oxygen and nitrogen present from the drying process, thereby rendering the zeolite ineffective as a desiccant.

US 3,036,986 describes a method for accelerating the curing reaction of a butyl rubber formulation by use of a strong acid. Said strong acid is introduced into the formulation while contained within the pores of a crystalline, zeolitic molecular sieve adsorbent at loading levels of at least 5 wt.%.

The zeolites of the present invention are those natural and synthetic crystalline alumina-silicate microporous materials having a three-dimensional porous structure. These zeolites are clearly distinguishable by their chemical composition and crystalline structure as determined by X-ray diffraction patterns.

Due to the presence of alumina, zeolites exhibit a negatively charged framework, which is counter-balanced by positive cations. These cations can be exchanged affecting pore size and adsorption characteristics. Examples are the potassium, sodium and calcium forms of zeolite A types having pore openings of approximately 3, 4 and 5 Angstrom respectively. Consequently they are called Zeolite 3A, 4A and 5A. The metal cation might also be ion exchanged with protons.

Further not limiting examples of synthetic zeolites are the zeolite X and zeolite Y. Not limiting examples for naturally occurring zeolites are mordenite, faujasite and erionite.

The activated zeolite might be added to the composition in form of fine powders or as an aggregated dispersible particles.

To achieve the good dispersion of the activated zeolite, the zeolite is preferably in the form of fine, small, dispersible particles that might be aggregated into larger agglomerates or processed into pellets. Generally the dispersed average particle size is in the range of 0.1 - 200 µm and more preferably the zeolite has an average particle size of 0.2 - 50 µm. This results in a large number of well dispersed sites within the vulcanizable rubber composition providing the highest effect in increasing cure rate of the vulcanizable rubber composition and will not negatively affect surface quality of the shaped and vulcanized article.
The rubber composition can comprise a blend of more than one of the above defined activated zeolites.

The amount of activated zeolite used in the process according to the invention depends on the required cure rate increasing effect, but also on the type of zeolite used, its pore size and level of deactivation. Preferably the level of activated zeolite is from 0.1 to 20 phr (parts per hundred parts rubber), more preferably from 0.5 to 15 phr and most preferred from 1 to 10 phr. If more than one activated zeolite is employed, the amount of activated zeolite mentioned before relates to the sum of the activated zeolites employed.

The vulcanizable rubber composition prepared according to the process of the present invention may further comprise at least one cross-linking agent different from the phenol formaldehyde resin.

A cross-linking agent different from the phenol formaldehyde resin may include, for example, sulfur, sulfur compounds e.g. 4,4'-dithiomorpholine; organic peroxides e.g. dicumyl peroxide; nitroso compounds e.g. p-dinitrosobenzene, bisazides and polyhydrosilanes. One or more cross-linking accelerators and/or coagents can be present to assist the cross-linking agents. Preferred are sulfur in combination with common accelerators or organic peroxides in combination with common coagents.

The presence of a further cross-linking agent may result in an improved state of cure of the rubber compound and improved vulcanized polymer properties. Such improvement may originate from a synergistic effect of the cross-linking agents, a dual network formation by each individual cross-linking agent or the cure incompatibility of a rubber phase in the case of a rubber blend.

In the case that further cross-linking agents are present in the vulcanizable rubber compositions, good results are obtained with from 0.1 to 20 parts by weight of further cross-linking agents per 100 parts by weight of elastomeric polymer. Preferably with 0.2 to 10 parts by weight, more preferably with 0.3 to 5 parts by weight of further cross-linking agents per 100 parts by weight of elastomeric polymer. If more than one further cross-linking agent is employed, the amount of further cross-linking agent mentioned before relates to the sum of the further cross-linking agents employed.

### Further components

In a preferred embodiment of the invention the vulcanizable rubber composition prepared according to the present invention comprises at least one compound selected from the group consisting of processing aid, blowing agent, filler, softening agent and stabilizer or a combination thereof.

The processing aid includes, for example, stearic acid and its derivatives. These processing aids may be used alone or in combination of two or more kinds. In the case that processing aids are present in the vulcanizable rubber composition, the amount of the processing aid is in the range of, for example, 0.1 to 20 phr, or preferably 1 to 10 phr (parts per hundred parts rubber). If more than one processing aid is employed, the amount of processing aid mentioned before relates to the sum of the processing aids employed.

The blowing agent includes organic blowing agents and inorganic blowing agents. Organic blowing agents include, azo blowing agents, such as azodicarbonamide (ADCA), barium azodicarboxylate, azobisisobutyronitrile (AIBN), azocyclohexylnitrile, and azodiaminobenzene; N-nitroso foaming agents, such as N,N'-dinitrosopentamethylenetetramine (DTP), N,N'-dimethyl-N,N'-dinitroso terephthalamide, and trinitrosotrimethyltriamine; hydrazide foaming agents, such as 4,4'-oxybis(benzenesulphonyl hydrazide) (OBSH), paratoluene sulfonylhydrazide, diphenyl sulfone-3,3'-disulfanylhydrazide, 2,4-toluene disulfonylhydrazide, p,p-bis(benzenesulfonyl hydrazide) ether, benzene-1,3-disulfonylhydrazide, and allylbis(sulfonylhydrazide);semicarbazide foaming agents, such as p-toluylenesulfonyl semicarbazide and 4,4'-oxybis(benzenesulfonyl semicarbazide); fluoroalkane foaming agents, such as trichloromonofluoromethane and dichloromonofluoromethane; triazole foaming agents, such as 5-morphoyl-1,2,3,4-thiatriazole; and other known organic foaming agents. The organic foaming agents also include thermally expansible microparticles containing microcapsules in which thermally expansive material is encapsulated. The inorganic foaming agents include, for example, hydrogencarbonate, such as sodium hydrogencarbonate and ammonium hydrogencarbonate; carbonate, such as sodium carbonate and ammonium carbonate; nitrite, such as sodium nitrite and ammonium nitrite; boron hydride salts, such as sodium borohydride; azides; and other known inorganic foaming agents. These foaming agents may be present alone or in combination of two or more kinds.

The amount of the additional blowing agent is in the range of 0 to 20 phr, preferably 0.1 to 19 phr. If more than one blowing agent is employed, the amount of blowing agent mentioned before relates to the sum of the blowing agents employed.

The fillers include, for example, carbon black, carbon nano tubes, inorganic fillers, such as calcium carbonate, magnesium carbonate, calcium hydroxide, magnesium hydroxide, aluminium hydroxide, silicic acid and salts thereof, clay, nano clays, talc, mica powder, bentonite, silica, alumina, aluminium silicate, acetylene black, and aluminium powder; organic fillers, such as cork, cellulose and other known fillers. These fillers may be used alone or in combination of two or more kinds.

In the case that fillers are present in the vulcanizable rubber compositions, the amount of the filler is in the range of 10 to 300 phr, preferably 50 to 200 phr, or more preferably 100 to 200 phr. If more than one filler is employed, the amount of filler mentioned before relates to the sum of the fillers employed. Preferably the content of CaO is smaller than 0.5 wt %.

The softening agents include petroleum oils (e.g. paraffin-based process oil (paraffin oil, etc.), naphthene-based process oil, drying oils or animal and vegetable oils (e.g. linseed oil, etc.), aromatic process oil, etc.), asphalt, low molecular weight polymers, organic acid esters (e.g. phthalic ester (e.g. di-2-octyl phthalate (DOP), dibutyl phthalate (DBP)), phosphate, higher fatty acid ester, alkyl sulfonate ester, etc.), and thickeners. Preferably petroleum oils, or more preferably paraffin-based process oil is used. These softening agents may be used alone or in combination of two or more kinds.

In the case that softening agents are present in the vulcanizable rubber compositions, the amount of the softening agent is in the range of 10 to 200 phr, or preferably 20 to 100 phr. If more than one softening agent is employed, the amount of softening agent mentioned before relates to the sum of the softening agents employed.

The stabilizers include fire retardant, anti-aging agent, heat stabilizer, antioxidant and anti-ozonant.

In the case that stabilizers are present in the vulcanizable rubber compositions,these stabilizers may be present alone or in combination of two or more kinds. The amount of the stabilizer is in the range of 0.5 to 20 phr, or preferably 2 to 5 phr. If more than one stabilizer is employed, the amount of stabilizer mentioned before relates to the sum of the stabilizers employed.

Further, depending on the purpose and application, the vulcanizable rubber composition can contain waxes, tackifiers, desiccants, adhesives and coloring agents within the range of not affecting the excellent effect of the activated zeolite.

### Vulcanized article

One embodiment of the invention relates to a process for the manufacture of a vulcanized article comprising the steps of preparing a vulcanizable rubber composition in a process according to the present invention or preparing a vulcanizable rubber composition according to the present invention, shaping and vulcanizing the vulcanizable rubber composition.

### Preparation process

In the process of the present invention a vulcanizable rubber composition is prepared comprising
at least one elastomeric polymer,
at least one phenol formaldehyde resin cross-linker,
an activator package, and
at least one activated zeolite,
comprising the step of preparing a mixture of the following components:
the at least one elastomeric polymer, the at least one phenol formaldehyde resin cross-linker, the activator package and the at least one activated zeolite, by mixing the components and kneading, characterized in that the activated zeolite is added before the addition of the phenol formaldehyde resin cross-linker and preferably also before the addition of the activator package.
Preferably the activated zeolite is added after the addition of fillers or softening agents, if any.
Actually the mixing is considered to bring all components of the vulcanizable rubber composition together for kneading.

In a preferred embodiment, the mixing process is performed in an internal mixer, in an extruder or on a mill. The activated zeolite is added at a point within the mixing cycle that precedes the addition of the phenol formaldehyde resin cross-linker and preferably also the activator package. Such early addition will result in an enhanced activation effect from the zeolite.

Preferably the kneading is done in an internal mixer having either tangential or intermeshing rotors designed for the purpose of incorporating and dispersing rubber compounding ingredients, including fillers, softening agents, protective systems, activators and cure systems into a rubber matrix. Typically mixing proceeds for a time that is long enough to ensure good incorporation of all rubber compounding ingredients, while staying below a temperature above which vulcanisation of the cure system occurs. For resin cured compounds the mixing temperature should be in the range of 85 and 110°C, preferably of 90 and 95°C.

During kneading, the mixture may also be heated. Preferably, mixing is performed by first kneading the elastomeric polymer and the activated zeolite with optional ingredients such as fillers, softening agents, heavy metal oxide, stabilizers and blowing agent, as deemed appropriate, followed by the phenol formaldehyde resin cross-linker, the activator package and any other secondary cross-linking agents. Processing aids such as stearic acid may optionally be added before, during or after the addition of the phenol formaldehyde resin cross-linker and the activator package, depending on the desired improvement to the process. Whereas the addition of the phenol formaldehyde resin cross-linker, the activator package and any secondary cross-linking agent components can be done on the same mixing equipment, the cooling of the pre-mix and addition of these components is easily performed on a second mixing device such as a 2-roll mill. Such use of a second mixing device is advantageous where the control of temperature in the kneading process is difficult considering that the phenol formaldehyde resin cross-linker, the activator package and any secondary cross-linking agent components are heat sensitive and can thus be mixed to the composition at a lower temperature.

The vulcanizable rubber composition prepared according to the invention can be recovered from the mixing process in bulk or shaped in the form of sheets, slabs or pellets. The shaping of the elastomeric composition can take place after mixing, as an individual shaping step, ahead the vulcanization process or during the vulcanization process.

In a preferred embodiment, the shaping of the vulcanizable rubber composition is performed by extrusion, calendaring, compression molding, transfer molding or injection molding.

The vulcanizable rubber composition thus prepared is heated to a temperature at which the curing process takes place, so that a cross-linked rubber composition is obtained. A characteristic of the present invention is that the presence of an activated zeolite allows a reduction of the temperature at which the curing process takes place, resulting in a more economical process. Further will the lower vulcanization temperature result in less deterioration of the vulcanized rubber composition.

In a preferred embodiment the curing of the rubber composition is performed in a steam autoclave, an infra red heater tunnel, a microwave tunnel, a hot air tunnel, a salt bath, a fluidized bed, a mold or any combination thereof.

An advantage of the present invention is that the vulcanization time of the vulcanizable rubber composition comprising a phenol formaldehyde resin cross-linker is between 5 seconds and 30 minutes and the vulcanization temperature is in the range between 120 and 250°C. More preferably the vulcanization time is between 15 seconds and 15 minutes and the vulcanization temperature is in the range between 140 and 240°C. Most preferably the vulcanization time is between 1 and 10 minutes and the vulcanization temperature is in the range between 160 and 220°C.

The curing processes can be performed in any equipment that is known and suitable for curing of a rubber composition. This can be done either in a static process, as well as in a dynamic process. In the first case, mention can be made to curing in a predetermined shape, or thermoforming, by the use of a heated shape.

Preferably, the dynamic process comprises a shaping e.g. by extrusion continuously feeding the shaped rubber composition to a curing section (e.g. hot air tunnel). When an extruder is used for the shaping of the rubber composition, the temperature should be carefully controlled in order to prevent premature vulcanization e.g. scorch. The mixture is then heated to conditions where the rubber composition is vulcanized.

Optionally the cured composition is subjected to a post cure treatment that further extends the vulcanization time.

The method for curing the rubber composition is not particularly limited to the above processes. Alternatively the composition can be shaped into a sheet using a calender, or the like, and then be cured in a steam autoclave. Alternatively, the rubber composition can be formed into a complex shape, such as an uneven shape, by injection molding, press forming, or other forming method, and then be cured.
Preferably the process according to the present invention is characterized in that the vulcanization is carried out by heating the vulcanizable rubber composition at normal ambient air pressure in the presence of oxygen.

This process option is preferably done in that the vulcanizable rubber composition thus prepared is heated in hot air at normal ambient air pressure, either as a batch process or by a process whereby the rubber composition is shaped and continuously conveyed through a hot air curing oven, to a temperature at which the curing process takes place, so that a cross-linked rubber composition is obtained. The preferred hot air curing temperatures are at 115 to 260°C, preferably at 160 and 220°C.

A benefit of the hot curing process is that the presence of a dried zeolite allows a reduction or elimination of porosity within the section of the cured rubber product, enabling the manufacture of said rubber product having the original and aged properties, means properties determine after 48h at 175°C, comparable to equivalent peroxide cured rubber compositions, but without the disadvantages of the development of a sticky surface on the cured rubber product, or the subsequent need to incorporate a washing process, as would be the case when passing the peroxide cured rubber composition through molten liquid salts.

This is a quite important benefit, since rubber compositions exhibiting such rapid rates and high states of cure can be considered to be well suited for the production of extruded profiles vulcanized by a continuous curing process, such as by the use of hot air ovens, a molten salt bath, a ballotini fluidized bed, or any other continuous vulcanization methods known to those skilled in the art.

When the selected method of continuous vulcanization is to pass the rubber product through a hot air oven, a resin cure system has a distinct advantage when compared to products cured by peroxide in that the cure reaction is not inhibited by the presence of oxygen, and therefore the surface of the cured rubber product does not become sticky. It is well known that traces of oxygen can inhibit peroxide vulcanization resulting in a tacky surface of the cured product, and many studies have been reported detailing the efforts made to overcome this problem.

It is therefore normal manufacturing practice to continuously cure peroxide vulcanized extruded rubber profiles in an environment where air, and therefore oxygen is excluded, and this is most commonly achieved by the use of molten salts more commonly known as a liquid cure medium (LCM) whereby the extruded rubber profile is submerged within a tank of molten salts, such as blend combinations of lithium nitrate and potassium nitrate that are heated to temperatures exceeding 200°C. When compared to hot air curing through an oven, the use of the LCM process raises environmental concerns due to emissions of noxious fumes and the need to periodically dispose of and refresh the salt medium. Handling rubber products through molten salts at temperatures that exceed 200°C can also be considered a health and safety concern for operators due to splashing of the molten salt. A further consideration is that salt remains on the surface of the rubber product when it exits the curing process. This requires that the rubber product goes through a subsequent washing process to remove the salt from the product surface. This is an extra process that is not necessary when rubber products are cured in hot air.

It can therefore be concluded that hot air vulcanization of resin cured rubber compositions having original and aged properties that are comparable to peroxide cured rubber compositions, but without an inherent susceptibility to surface degradation through oxidative chain scission would be advantageous.

An advantage of the present invention is that a pressure-less cure can be applied to the vulcanizable rubber compound comprising an activated zeolite. Such pressure-less cure is often characterized by an unwanted liberation of gasses during the curing process resulting in porosity within the cured article and surface defects. The vulcanized rubber compounds of the present invention are characterized by low porosity and good surface quality.

A further advantage of the present invention concerns the vulcanizable rubber composition prepared by the process of the present invention. Rubber compositions are commonly cross-linked by sulfur or peroxide. The increased cure rate achieved by the present invention raises the cure rate of phenolic resins to the same level of activity as sulphur and peroxide cures while providing the advantages of resin cure to rubber compositions, namely good high temperature resistance of the vulcanizate and oxygen inertness during the curing process.

A particular advantage of the present invention is that vulcanizable rubber compositions prepared by the process of the present invention show a short rate of cure (t'c(90)).

The invention also relates to a vulcanized article, prepared by the process according to the present invention.

A further particular advantage of the present invention is that the vulcanized articles prepared from the inventive vulcanizable rubber compositions show a high final state of cure (MH).

Further characteristics of a vulcanized article according to the present invention are low compression sets at both low (-25°C) and high (150°C) temperatures and high tensile strength. Another characteristic is the good heat aging stability of the vulcanized material expressed by only limited deterioration of the tensile properties upon prolonged temperature treatment.

Typical applications for a vulcanized article according to the present invention are in the automotive segment, e.g. exhaust hangers, front light seals, air hoses, sealing profiles, engine mounts, in the building and construction segment, e.g. seals building profiles and rubber sheeting and in general rubber goods, e.g. conveyor belts, rollers, chemical linings and textile reinforced flexible fabrications.

### Examples and Comparative Experiments

### General procedure

The compositions of examples and comparative experiments were prepared using an internal mixer with a 3 liter capacity (Shaw K1 Mark IV Intermix) having intermeshing rotor blades and with a starting temperature of 25°C. The elastomeric polymer was first introduced to the mixer and allowed to crumble for a period of 30 seconds before the carbon black, mineral oil and zeolite were added. Mixing was allowed to proceed until a mix temperature of 70°C was achieved, when the remaining ingredients were added. Mixing was allowed to proceed until a mix temperature of 95°C was achieved, when the batches were transferred to a two roll mill (Troester WNU 2) for cooling, and blending to achieve a high level of ingredient dispersion.

In inventive examples 2 and 4, wherein activated zeolite was added at a point within the mixing cycle that precedes the addition of the phenol formaldehyde resin cross-linker the rate of cure and the final state of cure is improved, over the rate of cure and the final state of cure in comparative examples 1 and 3.

The compounds Q and R are basic compositions comprising all components of the compositions in inventive examples 2 and 4 and comparative examples 1 and 3 except of the activated zeolite.

Analysis of cure rheology was carried out using a moving die rheometer (MDR2000E) with test conditions of 20 minutes at 180°C. The cure characteristics are expressed in ML, MH, AS (= MH - ML), ts2 and t'c(90), according to ISO 6502:1999.

Test pieces were prepared by curing at 180°C using a curing time equivalent to twice t'c90 as determined by MDR rheology testing.

The test pieces were used to determine physical properties reported in the tables.

If not mentioned otherwise, the standard procedures and test conditions were used for Hardness (ISO 7619-1:2004), Tensile strength (ISO 37:2005 via dumb-bell type 2), Tear strength (ISO 34-1:2010), Hot air aging (ISO 188:2007), Compression set (ISO 815-1:2008) and Mooney (ISO 289-1:2005).
The activated zeolite as used in the following examples was obtained by the treating of zeolite 5A in powder form (having an average particle size of 50 µm) in a vacuum oven for 48 hours at a temperature of 180°C and a pressure of about 10 mm Hg.

Compositions and results of examples and comparative experiments are given in tables 1-4.

Comparative example 1 and inventive example 2 compare compositions based on SBR mixed with the addition of activated zeolite, as seen in Table 1. In comparative example 1, compound Q is taken and to it is mixed 10 phr of activated zeolite, thus the activated zeolite is added after the phenol formaldehyde resin cross-linker SP-1045 and also after the the SnCl₂.2H₂O. In inventive example 2 the same formulation is mixed in a single mixing stage, with the addition of the activated zeolite being before the addition of the phenol formaldehyde resin cross-linker SP-1045 and also before the SnCl₂.2H₂O. In Table 2 it can be seen that the final state of cure (MH) of comparative example 1 is lower than for inventive example 2. Similarly, the rate of cure to t'c(90) is longer for comparative example 1 than for inventive example 2. The differences seen in these measurement clearly demonstrate that adding activated zeolite in the mixing process before the phenol formaldehyde resin cross-linker is advantageous when compared to adding the zeolite in the mixing process after the phenol formaldehyde resin cross-linker has already been added.

**Table 1**

| Example / Comp. Experiment | | Compound Q | Comparative example 1 | Inventive example 2 |
|---|---|---|---|---|
| Compound Q | | | 197.5 | |
| SBR 1500¹⁾ | | 100 | | 100 |
| Carbon black | | 60 | | 60 |
| Activated Zeolite 5A²⁾ | | | 10 | 10 |
| Mineral oil³⁾ | | 20 | | 20 |
| Wax⁴⁾ | | 2 | | 2 |
| Protective agent⁵⁾ | | 2 | | 2 |
| Resin SP-1045⁶⁾ | | 10 | | 10 |
| SnCl2.2H2O | | 1.5 | | 1.5 |
| Stearic acid | | 2 | | 2 |
| *Total lab* | *phr* | *197.5* | *207.5* | *207.5* |

| | | | | |
|---|---|---|---|---|
| 1) SBR1500 (Provider Lanxess Deutschland GmbH) 2) Zeolite 5A (Provider Acros Organics) 3) naphthenic type process oil from Sunoco 4) Paraffin Wax 4110 from TerHell 5) Antilux 654 from Rhein Chemie 6) octylphenol heat reactive resin (Provider S.I. Group) | | | | |

**Table 2**

| Rheometer MDR2000E | ½° | x°C | y | | Comparative example 1 | Inventive example 2 |
|---|---|---|---|---|---|---|
| Test time | | | | [min] | 20 | 20 |
| Test temp. | | | | [°C] | 180 | 180 |
| ML | | | | [dNm] | 0.92 | 1.99 |
| MH | | | | [dNm] | 16.71 | 21.18 |
| MH - ML | | | | [dNm] | 15.79 | 19.19 |
| ts2 | | | | [min] | 0.83 | 0.63 |
| t'c(90) | | | | [min] | 11.43 | 10.53 |

Comparative example 3 and inventive example 4 compare compositions based on high cis polybutadiene rubber mixed with the addition of activated zeolite, as seen in Table 3. In comparative example 3, Compound R is taken and to it is mixed 10 phr of activated zeolite, thus the activated zeolite was added after the phenol formaldehyde resin cross-linker SP-1045 and also after the SnCl₂.2H₂O. In inventive example 4 the same formulation is mixed in a single mixing stage, with the addition of the activated zeolite being before the addition of the phenol formaldehyde resin cross-linker SP-1045 and also before the SnCl₂.2H₂O. In Table 3 it can be seen that the final state of cure (MH) of comparative example 3 is lower than for inventive example 4. The differences seen in these measurement clearly demonstrate that adding activated zeolite in the mixing process before the phenol formaldehyde resin cross-linker is advantageous for a higher state of cure when compared to adding the zeolite in the mixing process after the phenol formaldehyde resin cross-linker has already been added.

**Table 3**

| Example / Com. Experiment | | Compound R | Comparative example 3 | Inventive example 4 |
|---|---|---|---|---|
| Compound R | | | 197.5 | |
| Buna CB23 Hi Cis BR¹⁾ | | 100 | | 100 |
| Carbon Black | | 60 | | 60 |
| Activated Zeolite 5A²⁾ | | | 10 | 10 |
| Mineral oil³⁾ | | 20 | | 20 |
| Wax⁴⁾ | | 2 | | 2 |
| Protective agent⁵⁾ | | 2 | | 2 |
| Resin SP-1045⁶⁾ | | 10 | | 10 |
| SnCl2.2H2O | | 1.5 | | 1.5 |
| Stearic acid | | 2 | | 2 |
| *Total lab* | *Phr* | *197.5* | *207.5* | *207.5* |

| | | | | |
|---|---|---|---|---|
| 1) Butyl rubber having a cis 1,4 polybutadien polymer of at least 96&(Provider Lanxess Deutschland GmbH) 2) Zeolite 5A (Provider Acros Organics) 3) naphthenic type process oil from Sunoco 4) Paraffin Wax 4110 from TerHell 5) Antilux 654 from Rhein Chemie 6) octylphenol heat reactive resin (Provider S.I. Group) | | | | |

**Table 4**

| **Rheometer ½° x°C y MDR2000E** | | Comparative example 3 | Inventive example 4 |
|---|---|---|---|
| Test time | [min] | 20 | 20 |
| Test temp. | [C] | 180 | 180 |
| ML | [dNm] | 2.97 | 3.96 |
| MH | [dNm] | 23.78 | 29.49 |
| MH - ML | [dNm] | 20.81 | 25.53 |
| ts2 | [min] | 0.2 | 0.22 |
| t'c(90) | [min] | 3.27 | 3.57 |

Further to the standard testing procedures, examples shown in Table 5 all rubber compositions were extruded using a cold feed extruder with a 45 mm screw diameter to form tubes with an inside diameter of 8 mm and an outside diameter of 20 mm. The extruded tubes were cut to 10 cm lengths, then suspended in a circulating hot air oven at 180°C for curing times equivalent to 4 times t'c90 as determined from MDR 2000 rheometer test data. Density measurements were taken from the cured tubes.

Comparative example 4 represents a peroxide cured EPDM compound having the addition of calcium oxide to the rubber composition, and is compared with Compound A in which no desiccant is used.

Comparative example 5 represents a sulphur cured EPDM compound having the addition of calcium oxide to the rubber composition, and is compared with Compound B in which no desiccant is used.

Inventive example 6 represents a resin cured EPDM compound having the addition of zeolite to the rubber composition, and is compared with Comparative example 7 in which no zeolite is used.

In Table 6 it can be seen that the rates of cure for Comparative example 7 and Inventive Example 6 are significantly faster than for Compounds A and
B and Comparative Examples 4 and 5, and similarly, the final cross-link densities as expressed by MH-ML are significantly higher, confirming the potential suitability of these compounds for continuous curing.

In Table 7 the original and aged physical properties are given for each rubber composition, confirming that the aging characteristics of the resin cured composition with a zeolite desiccant, as described by Inventive Example 6, compare favorably with the aged properties of the peroxide cured rubber composition using a calcium oxide desiccant, as described by Comparative Example 4. It can further be seen that the rubber composition described by Inventive Example 6, when extruded as a tube and cured in hot air shows no sign of surface stickiness, and is comparable with sulphur cured compound B and Comparative Example 5, whereas Compound A and Comparative Example 4, which are both peroxide cured rubber compositions both exhibited surface stickiness. Density measurements taken from the cured tubes are given as an indication of porosity, where the higher the density and the closer it is to the density of a moulded test piece from the same rubber composition, the lower the level of porosity seen within a section of the cured tube. Inventive Example 6 shows a reduction in porosity when compared with Comparative example 7, which has no zeolite in its composition, and a lower level of porosity than was found for the peroxide cured rubber composition with calcium oxide desiccant described by Comparative Example 4.

**Table 5**

| Example / Comp. Experiment | Compound A | Compound B | Comparative example 7 | Comparative Example 4 | Comparative Example 5 | Inventive Example 6 |
|---|---|---|---|---|---|---|
| EPDM KELTAN 8340A¹⁾ | 100.00 | 100.00 | 100.00 | 100.00 | 100.00 | 100.00 |
| Carbon Black | 70.00 | 70.00 | 70.00 | 70.00 | 70.00 | 70.00 |
| White filler²⁾ | 30.00 | 30.00 | 30.00 | 30.00 | 30.00 | 30.00 |
| Mineral oil³⁾ | 85.00 | 85.00 | 85.00 | 85.00 | 85.00 | 85.00 |
| CaO-80 (K. GR/DAB)⁴⁾ | | | | 10.00 | 10.00 | |
| Activated zeolit 5A⁵⁾ | | | | | | 10.00 |
| ZnO | | 8.00 | | | 8.00 | |
| Stearic acid | 0.50 | 1.00 | | 0.50 | 1.00 | |
| Peroxide package ⁶⁾ | 9.00 | | | 9.00 | | |
| Peroxide co-agent⁷⁾ | 2.00 | | | 2.00 | | |
| S-cure package⁸⁾ | | 6.70 | | | 6.70 | |
| Sulphur | | 0.80 | | | 0.80 | |
| Resin SP-1045⁹⁾ | | | 10.00 | | | 10.00 |
| SnCl2.2H2O | | | 1.50 | | | 1.50 |
| *Total lab phr* | 296.50 | 301.50 | 296.50 | 306.50 | 311.50 | 306.50 |

| | | | | | | |
|---|---|---|---|---|---|---|
| ¹⁾ EthylenePropyleneDieneTerpolymer / Provider Lanxess Elastomers B.V. ²⁾ talc ³⁾ paraffine oil Sunpa 2280... ⁴⁾ dessicant (80% active dispersion in a polymer ⁵⁾ Zeolite 5A (Provider Acros Organics) ⁶⁾ 6.0phr Bis(tert-butylperoxyisopropyl)benzine (40% on an EPDM carrier); and 3.0phr 1,1-bis(tert-butylperoxy)-3,3,5-trimethylcyclohexane (40% on an EPDM carrier); ⁷⁾ trimethylol propane trimethacrylate ⁸) DPG - 80 (80% on inert carrier); 0.5phr; TBBS 0.5phr; CBS - 80 (80% on inert carrier)) 1.4phr; ZDEC - 80 (80% on inert carrier) 2.3phr; ZDBP - 50 (50% on inert carrier) 2.0phr ⁹⁾ octylphenol heat reactive resin (Provider S.I. Group) | | | | | | |

**Table 6**

| Rheometer MDR2000E | Units | Compound A | Compound B | Comparative Example 7 | Comparative Example 4 | Comparative Example 5 | Inventive Example 6 |
|---|---|---|---|---|---|---|---|
| Test temp. | [C] | 180 | 180 | 180 | 180 | 180 | 180 |
| Test time | [min] | 20 | 20 | 20 | 20 | 20 | 20 |
| ML | [dNm] | 0.80 | 0.59 | 1.09 | 0.80 | 0.57 | 1.42 |
| MH | [dNm] | 7.56 | 7.90 | 13.82 | 7.82 | 8.11 | 13.06 |
| MH-ML | [dNm] | 6.76 | 7.31 | 12.73 | 7.02 | 7.54 | 11.64 |
| ts2 | [min] | 0.48 | 1.23 | 0.40 | 0.47 | 1.12 | 0.24 |
| t'c(90) | [min] | 3.91 | 2.71 | 9.93 | 4.07 | 2.19 | 2.73 |

**Table 7**

| Properties | Units | Compound A | Compound B | Comparativ e Example 7 | Comparative Example 4 | Comparative Example 5 | Inventive Example 6 |
|---|---|---|---|---|---|---|---|
| Hardness Original | [ShoreA] | 45.2 | 47.3 | 56.7 | 45.2 | 45.8 | 54.4 |
| Aged Hardness 48 hours @ 175°C | [ShoreA] | 45.2 | 57.4 | 61.3 | 46.1 | 58 | 58 |
| *Change* | *[ShoreA]* | *0* | *10.1* | *4.6* | *0.9* | *12.2* | *3.6* |
| Tensile strength | [MPa] | 11.1 | 13.5 | 11.7 | 11.3 | 12.8 | 11.1 |
| M 100 | [MPa] | 1.4 | 1.4 | 3.4 | 1.5 | 1.4 | 3.4 |
| M 300 | [MPa] | 5.2 | 4 | 0 | 5.2 | 4 | 11.1 |
| Elongation | [%] | 525 | 738 | 260 | 531 | 716 | 291 |
| Aged Tensile strength 48hrs @ 175°C | [MPa] | 4.4 | 9.1 | 4 | 4.3 | 7.9 | 8.9 |
| *Change* | *[%]* | *-60.4* | -*32.6* | *-65.8* | *-61.9* | *-38.3* | *-19.8* |
| M 100 | [MPa] | 2 | 3.8 | 0 | 1.6 | 3.8 | 4.7 |
| M 300 | [MPa] | 0 | 0 | 0 | 4.1 | 0 | 0 |
| Elongation | [%] | 236 | 235 | 86 | 341 | 219 | 182 |
| *Change* | *[%]* | *-55* | *-68.2* | *-66.9* | *-35.8* | *-69.4* | *-37.5* |
| Compression set (ISO / DIN Type B) | | | | | | | |
| Test time | [hr] | 72 | 72 | 72 | 72 | 72 | 72 |
| Test temp. | [C] | 23 | 23 | 23 | 23 | 23 | 23 |
| CS Median | [%] | 7 | 8 | 2 | 10 | 8 | 4 |
| Compression set (ISO / DIN Type B) | | | | | | | |
| Test time | [hr] | 24 | 24 | 24 | 24 | 24 | 24 |
| Test temp. | [C] | 100 | 100 | 100 | 100 | 100 | 100 |
| CS Median | [%] | 10.3 | 42.5 | 5.8 | 11.8 | 55.4 | 8.3 |
| Compression set (ISO / DIN Type B) | | | | | | | |
| Test time | [hr] | 24 | 24 | 24 | 24 | 24 | 24 |
| Test temp. | [C] | 150 | 150 | 150 | 150 | 150 | 150 |
| CS Median | [%] | 16.3 | 82.9 | 23.6 | 17.3 | 86.3 | 22.4 |
| Compression set (ISO / DIN Type B) | | | | | | | |
| Test time | [hr] | 24 | 24 | 24 | 24 | 24 | 24 |
| Test temp. | [C] | -25 | -25 | -25 | -25 | -25 | -25 |
| CS Median | [%] | 65.2 | 62.6 | 35.7 | 64.5 | 64.7 | 38.4 |
| Moulded Density | [Kg/m³] | 1.083 | 1.108 | 1.083 | 1.102 | 1.126 | 1.105 |
| Hot air cured tube density | [Kg/m³] | 0.802 | 0.719 | 0.932 | 0.974 | 1.028 | 1.003 |
| Tube surface condition | | Sticky | Non-sticky | Non-sticky | Sticky | Non-sticky | Non-sticky |

A less subjective measurement of surface stickiness after hot air curing was determined on Comparative Example 7, Comparative Example 4, Comparative Example 5 and Inventive Example 6. Samples were prepared from each rubber composition by passing them through a two roll mill to form a 2mm thick sheet from which squares of 50mm x 50mm were cut. These were then suspended in a DIN forced air laboratory oven for 15 minutes at a temperature of 180°C. Test pieces were cut from the cured sheets and were tested in a Monsanto Tel-Tak tester. While this test is not described by any National standard, it is designed to give a numerical measurement of the surface tack of rubber samples and was therefore considered to be an appropriate test method. The test is conducted by manually pressing two test pieces of the same sample together so that the contact area of the test pieces is 1cm². After a period of applied pressure of 1 minute the load required to separate the test pieces is measured in ounces. Five tests were carried out from each rubber composition, and the result was taken as the median measurement recorded. Table 8 shows that Comparative Example 7 (resin cure with no zeolite), Comparative Example 5 (sulphur cure with calcium oxide) and Inventive Example 6 (resin cure with zeolite) all have exactly the same Tel-Tak result while Comparative Example 4 (peroxide cure with calcium oxide) gave a significantly higher result, indicating an increase load required to separate the test pieces.

**Table 8**

| Example / Comp. Experiment | Units | Comparative Example 7 | Comparative Example 4 | Comparative Example 5 | Inventive Example 6 |
|---|---|---|---|---|---|
| Tel-Tak separation Load | [Ounces] | 8 | 12 | 8 | 8 |

## Claims

1. A process for preparing a vulcanizable rubber composition comprising
at least one elastomeric polymer,
at least one phenol formaldehyde resin cross-linker,
an activator package, and
at least one activated zeolite,
comprising the step of preparing a mixture of the following components:
the at least one elastomeric polymer, the at least one phenol formaldehyde resin cross-linker, the activator package and the at least one activated zeolite,
by mixing the components and kneading,
**characterized in that** the activated zeolite is added before the addition of the phenol formaldehyde resin cross-linker.

2. The process according to claim 1, **characterized in that** the mixing is performed in an internal mixer, in an extruder or on a mill.

3. The process according to claim 1 or 2, **characterized in that** the mixture is kneaded at a temperature of of 85 and 110°C.

4. The process according to any one of claims 1 to 3, **characterized in that** the elastomeric polymer is Natural rubber, Polybutadiene rubber, Nitrile rubber, Hydrogenated or partially hydrogenated nitrile rubber, Styrene-butadiene rubber, Styrene-isoprene-butadiene rubber, Butyl rubber, Polychloroprene, Ethylene propylene rubber, Chlorinated polyethylene, Chlorosulfonated rubber, Chlorinated isobutylene-isoprene copolymers with chlorine contents of 0.1 to 10 wt. %, Brominated isobutylene-isoprene copolymers with bromine contents of 0.1 to 10 wt. %, Polyisoprene rubber or a mixture thereof.

5. The process according to any one of claims 1 to 3, **characterized in that** the elastomeric polymer comprises 1,1-disubstituted or 1,1,2-trisubstituted carbon-carbon double bonds.

6. The process according to any one of claims 1 to 5, **characterized in that** the activator package comprises at least one metal halide.

7. The process according to any one of claims 1 to 5, **characterized in that** the activator package comprises at least one halogenated organic compound.

8. The process according to any one of claims 1 to 5, **characterized in that** the phenol formaldehyde resin is halogenated.

9. The process according to any one of claims 1 to 8, **characterized in that** the activator package comprises at least one heavy metal oxide.

10. The process according to any one of claims 1 to 9, **characterized in that** as further components at least one compound selected from the group consisting of processing aid, blowing agent, filler, softening agent and stabilizer or a combination thereof is mixed and kneaded.

11. A vulcanizable rubber composition comprising
at least one elastomeric polymer,
at least one phenol formaldehyde resin cross-linker,
an activator package, and
at least one activated zeolite,
prepared by a process according to any of claims 1 to 10.

12. A process for the manufacture of a vulcanized article comprising the steps of preparing a vulcanizable rubber composition in a process according to any one of the claims 1 to 10 or preparing a vulcanizable rubber composition according to claim 11, shaping and vulcanizing the vulcanizable rubber composition.

13. The process according to claim 12, **characterized in that** the shaping is carried out by extrusion, calendaring, compression molding, transfer molding, transfer molding, injection molding or combination thereof.

14. The process according claim 12 or 13, **characterized in that** the vulcanization is carried out by heating the vulcanizable rubber composition at normal ambient air pressure in the presence of oxygen.

15. The process according claim 12 or 13, **characterized in that** the vulcanization is carried out by heating the vulcanizable rubber composition.

16. A vulcanized article made by a process according to any one of claims 12 to 15.

## Patentansprüche

1. Verfahren zur Herstellung einer vulkanisierbaren Kautschukzusammensetzung, umfassend
mindestens ein elastomeres Polymer,
mindestens einen Phenol-Formaldehyd-Harz-Vernetzer,
ein Aktivatorpaket und
mindestens einen aktivierten Zeolith,
bei dem man eine Mischung der folgenden Komponenten herstellt:
des mindestens einen elastomeren Polymers, des mindestens einen Phenol-Formaldehyd-Harz-Vernetzers, des Aktivatorpakets und des mindestens einen aktivierten Zeoliths,
indem man die Komponenten mischt und kneter,
**dadurch gekennzeichnet, dass** der aktiviert Zeolith vor der Zugabe des Phenol-Formaldehyd-Harz-Vernetzers zugegeben wirt.

2. Verfahren nach Anspruch 1, **dadurch gekennzeichnet, dass** das Mischern in einem Innenmischer, in einen Extruder oder auf einer Mühle durchgeführt wird.

3. Verfahren nach Anspruch 1 oder 2, **dadurch gekennzeichnet, dass** die Mischung bei einer Temperatur zwischen 85 und 110°C geknetet wird.

4. Verfahren nach einem der Ansprüche 1 bis 3, **dadurch gekennzeichnet, dass** es sich bei dem elastomeren Polymer um Naturkautschuk, Polbutadienkautschuk, Nitrilkautschuk, hydrierten oder teilhydrierten Nitrilkautschuk, Styrol-Butadien-Kautschuk, Styrol-Isopren-Butadien-Kautschuk, Butylkautschuk, Polychloropren, Ethylen-Propylen-Kautschuk, chloriertes Polyethylen, chlorsulfonierten Kautschuk, chlorierte Isobutylen-Isopren-Copolymere mit Chlorgehalten von 0,1 bis 10 Gew.-%, bromierte Isobutylen-Isopren-Copolymere mit Bromgehalten von 0,1 bis 10 Gew.-%, Polyisoprenkautschuk oder eine Mischung davon handelt.

5. Verfahren nach einem der Ansprüche 1 bis 3, **dadurch gekennzeichnet, dass** das elastomere Polymer 1,1-disubstituierte oder 1,1,2-tri-substituierte Kohlenstoff-Kohlenstoff-Doppelbindungen umfasst.

6. Verfahren nach einem der Ansprüche 1 bis 5, **dadurch gekennzeichnet, dass** das Aktivatorpaket mindestens ein Metallhalogenid umfasst.

7. Verfahren nach einem der Ansprüche 1 bis 5, **dadurch gekennzeichnet, dass** das Aktivatorpaket mindestens eine halogenierte organische Verbindung umfasst.

8. Verfahren nach einem der Ansprüche 1 bis 5, **dadurch gekennzeichnet, dass** das Phenol-Formaldehyd-Harz halogeniert ist.

9. Verfahren nach einem der Ansprüche 1 bis 8, **dadurch gekennzeichnet, dass** das Aktivatorpaket mindestens ein Schwermetalloxid umfasst.

10. Verfahren nach einem der Ansprüche 1 bis 9, **dadurch gekennzeichnet, dass** als weitere Komponenten mindestens eine Vebindung aus der Gruppe bestehend aus Verarbeitungshilfsmitteln, Treibmitteln, Füllstoffen, Weichmachern und Stabilisatoren oder eine Kombination davon gemischt und geknetet werden.

11. Vulkanisierbare Kautschukzusammensetzung, umfassend
mindestens ein elastomeres Polymer,
mindestens einen Phenol-Formaldehyd-Harz-Vernetzer,
ein Aktivatorpaket und
mindestens einen aktivierten Zeolith, hergestellt durch ein vorfahren nach einem der Ansprüche 1 bis 10.

12. Verfahren zur Erstellung eines vulkanisierten Gegenstands, bei dem man in einem Verfahren nach einem der Ansprüche 1 bis 10 eine vulkanisierbare Kautschukzusammensetzung herstellt oder eine vulkanisierbare Kautschukzusammensetzung nach Anspruch 11 herstellt und die vulkanisierbare Kautschukzusammensetzung vulkanisiert.

13. Verfahren nach Anspruch 12, **dadurch gekennzeichnet, dass** die Formgebung durch Extrusion, Kalandrieren, Formpressen, Spritzpressen, Spritzgießen oder eine Kombination davon durchgeführt wird.

14. Verfahren nach Anspruch 12 oder 13, dadurch gekenntzeichnet, dass die Vulkanisation durch Erhitzen der vulkanisierbaren Kautschukzusammensetzung bei normalem Umgebungsluftdruck in Gegenwart von Sauerstoff durchgeführt wird.

15. Verfahren nach Anspruch 12 oder 13, **dadurch gekennzeichnet, dass** die Vulkanisation durch Erhitzen der vulkanisierbaren Kautschukzusammensetzung durchgeführt wird.

16. Vulkanisierter Gegenstand, hergestellt durch ein Verfahren nach einem der Ansprüche 12 bis 15.

## Revendications

1. Procédé de préparation d'une composition de caoutchouc vulcanisable comprenant :
au moins un polymère élastomère,
au moins un agent de réticulation résine de phénol-formaldéhyde,
un ensemble activateur et
au moins une zéolithe activée,
comprenant l'étape de préparation d'un mélange des composants suivants :
le ou les polymères élastomères, le ou les agents de réticulation résine de phénol-formaldéhyde, l'ensemble activateur et la ou les zéolithes activées,
par mélange des composants et malaxage,
**caractérisé en ce que** la zéolithe activée est ajoutée avant l'ajout de l'agent de réticulation résine de phénol-formaldéhyde.

2. Procédé selon la revendication 1, **caractérisé en ce que** le mélange est réalisé dans un mélangeur interne, dans une extrudeuse ou dans un broyeur.

3. Procédé selon la revendication 1 ou 2, **caractérisé en ce que** le mélange est malaxé à une température comprise entre 85 et 110 °C.

4. Procédé selon l'une quelconque des revendications 1 à 3, **caractérisé en ce que** le polymère élastomère est le caoutchouc naturel, le caoutchouc de polybutadiène, le caoutchouc de nitrile, le caoutchouc de nitrile hydrogéné ou partiellement hydrogéné, le caoutchouc de styrène-butadiène, le caoutchouc de styrène-isoprène-butadiène, le caoutchouc de butyle, le polychloroprène, le caoutchouc d'éthylène-propylène, le polyéthylène chloré, le caoutchouc chlorosulfoné, les copolymères d'isobutylène-isoprène chlorés ayant des teneurs en chlore de 0,1 à 10 % en poids, les copolymères d'isobutylène-isoprène bromés ayant des teneurs en brome de 0,1 à 10 % en poids, le caoutchouc de polyisoprène ou un mélange de ceux-ci.

5. Procédé selon l'une quelconque des revendications 1 à 3, **caractérisé en ce que** le polymère élastomère comprend des doubles liaisons carbone-carbone 1,1-disubstituées ou 1,1,2-trisubstituées.

6. Procédé selon l'une quelconque des revendications 1 à 5, **caractérisé en ce que** l'ensemble activateur comprend au moins un halogénure de métal.

7. Procédé selon l'une quelconque des revendications 1 à 5, **caractérisé en ce que** l'ensemble activateur comprend au moins un composé organique halogéné.

8. Procédé selon l'une quelconque des revendications 1 à 5, **caractérisé en ce que** la résine de phénol-formaldéhyde est halogénée.

9. Procédé selon l'une quelconque des revendications 1 à 8, **caractérisé en ce que** l'ensemble activateur comprend au moins un oxyde de métal lourd.

10. Procédé selon l'une quelconque des revendications 1 à 9, **caractérisé en ce qu'**au moins un composé choisi dans le groupe constitué par un adjuvant de traitement, un agent gonflant, une charge, un plastifiant et un stabilisateur ou une combinaison de ceux-ci est mélangé et malaxé en tant que composant supplémentaire.

11. Composition de caoutchouc vulcanisable, comprenant :
au moins un polymère élastomère,
au moins un agent de réticulation résine de phénol-formaldéhyde,
un ensemble activateur et
au moins une zéolithe activée,
préparée par un procédé selon l'une quelconque des revendications 1 à 10.

12. Procédé de fabrication d'un article vulcanisé comprenant les étapes suivantes :
la préparation d'une composition de caoutchouc vulcanisable par un procédé selon l'une quelconque des revendications 1 à 10 ou la préparation d'une composition de caoutchouc vulcanisable selon la revendication 11, le façonnage et la vulcanisation de la composition de caoutchouc vulcanisable.

13. Procédé selon la revendication 12, **caractérisé en ce que** le façonnage est réalisé par extrusion, calandrage, moulage par compression, moulage par transfert, moulage par injection ou une de leurs combinaisons.

14. Procédé selon la revendication 12 ou 13, **caractérisé en ce que** la vulcanisation est réalisée par chauffage de la composition de caoutchouc vulcanisable à une pression normale de l'air ambiant en présence d'oxygène.

15. Procédé selon la revendication 12 ou 13, **caractérisé en ce que** la vulcanisation est réalisée par chauffage de la composition de caoutchouc vulcanisable.

16. Article vulcanisé fabriqué par un procédé selon l'une quelconque des revendications 12 à 15.
